# EUROPÄISCHE PATENTANMELDUNG

(11) **EP 3 056 577 A1**
(43) Veröffentlichungstag der Anmeldung: **17.08.2016**
(21) Anmeldenummer: 15177594.7
(22) Anmeldetag: 21.07.2015
(51) Int. Cl.: C22B 3/02, C22B 3/10, C22B 59/00

(54) **REAKTOR ZUM AUFSCHLIESSEN EINES SELTENERD-HALTIGEN FESTSTOFFS**

(30) Priorität: 13.02.2015 DE 102015202627
(71) Anmelder: Siemens Aktiengesellschaft, 80333 München (DE)
(72) Erfinder: Friedrich, Bernd, 52074 Aachen (DE); Hanebuth, Marc, 90482 Nürnberg (DE); Kruse, Stephanie, 52070 Aachen (DE); Tremel, Alexander, 91052 Erlangen (DE); Voßenkaul, Daniel, 52064 Aachen (DE)

(57) **Zusammenfassung**

Die Erfindung betrifft einen Reaktor (10) zum Aufschließen eines Seltenerd-haltigen Feststoffs (18), insbesondere eines Seltenerd-haltigen Erzes, wobei der Reaktor (10) einen Reaktionsraum (14) umfasst, in welchem der Seltenerd-haltige Feststoff (18) zum Aufschließen mit einem säurehaltigen Aufschlussmittel in Kontakt bringbar ist, wobei der Reaktor (10) wenigstens einen HCl-Brenner (26) umfasst, mittels welchem HCl durch eine direkte Reaktion von Wasserstoff und Chlor herstellbar und als säurehaltiges Aufschlussmittel im Reaktionsraum (14) mit dem Seltenerd-haltigen Feststoff (18) in Kontakt bringbar ist. Die Erfindung betrifft weiterhin ein Verfahren zum Betreiben eines solchen Reaktors (10).

## Beschreibung

Die Erfindung betrifft einen Reaktor zum Aufschließen eines Seltenerd-haltigen Feststoffs sowie ein Verfahren zum Betreiben eines solchen Reaktors.

Der Aufschluss von Seltenerd-haltigen Feststoffen wie beispielsweise von Erzen oder Erz-Konzentraten verläuft üblicherweise über den Einsatz von säurehaltigen Aufschlussmitteln, die mit dem Seltenerd-haltigen Feststoff in Kontakt gebracht werden und diesen Feststoff für anschließende Verfahrensschritte, in denen die im Feststoff enthaltenen Seltenerden isoliert werden, aufschließen. Ziel des Aufschlussverfahrens ist generell das möglichst vollständige Überführen von schwerlöslichen Wertkomponenten des Feststoffs in säure- und/oder wasserlösliche Verbindungen unter möglichst weitgehender Vermeidung von Stoffverlusten oder Kontaminationen.

Die bekannten Aufschlussreaktionen werden dazu im Reaktionsraum eines Reaktors durchgeführt, wobei zum Beispiel Drehrohröfen verwendet werden, die mit Hilfe eines fossil betriebenen Brenners Temperaturen von einigen hundert Grad Celsius erreichen. Typisch sind hierbei 600 °C bis 800 °C. Diese hohen Temperaturen wirken sich günstig auf die Umwandlungsgeschwindigkeit und den Aufschluss der Seltenerd-haltigen Feststoffe aus. Aufgrund der relativ hohen Temperaturen wird normalerweise Schwefelsäure wegen ihres relativ hohen Siedepunkts als Aufschlussmittel verwendet.

Obwohl diese relativ hohen Temperaturen zu einem schnelleren Aufschluss des Feststoffs führen können, bedingen sie aber auch ein Verdampfen der eingesetzten Schwefelsäure, so dass neben einem schlechteren Nutzungsgrad auch ein schlechter Wärme- und Stofftransport durch die Gasphase limitierend auf die Aufschlussreaktion wirkt. Zusätzlich kann die Schwefelsäure damit nur zum Teil genutzt werden und muss überstöchiometrisch eingesetzt werden.

Bei der Verwendung von Schwefelsäure gelangen in einer anschließenden wässrigen Laugung der Aufschlussprodukte zudem Sulfate in Lösung, welche jedoch beispielsweise mit dem Extraktionsmittel P507 (2-Ethylhexyl-2-ethylhexylphosphonsäureester) inkompatibel sind. Die Verwendung dieses Extraktionsmittels ist aber wegen seiner hohen Selektivität für Seltenerden wünschenswert. Stattdessen muss daher typischerweise das weit weniger selektive Extraktionsmittel P204 (Di-(2-ethylhexyl)phosphorsäure) in einem an die Aufschlussreaktion folgenden Separationsschritt zur Elementtrennung eingesetzt werden, wodurch sich die Gewinnung von Seltenerden stark verteuert.

Aufgabe der vorliegenden Erfindung ist es, einen Reaktor zum Aufschließen eines Seltenerd-haltigen Feststoffs zu schaffen, welcher einen verbesserten Aufschluss von Seltenerd-haltigen Feststoffen ermöglicht. Eine weitere Aufgabe der Erfindung besteht darin, ein Verfahren zum Betreiben eines solchen Reaktors zu entwickeln, welches einen verbesserten Aufschluss von Seltenerd-haltigen Feststoffen erlaubt.

Die Aufgaben werden erfindungsgemäß durch einen Reaktor mit den Merkmalen des Patentanspruchs 1 sowie durch ein Verfahren gemäß Patentanspruch 8 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Reaktors als vorteilhafte Ausgestaltungen des Verfahrens und umgekehrt anzusehen sind.

Ein erster Aspekt der Erfindung betrifft einen Reaktor zum Aufschließen eines Seltenerd-haltigen Feststoffs, insbesondere eines Seltenerd-haltigen Erzes. Erfindungsgemäß ist es vorgesehen, dass der Reaktor wenigstens einen HCl-Brenner umfasst, mittels welchem HCl durch eine direkte Reaktion von Wasserstoff und Chlor herstellbar und als Aufschlussmittel im Reaktionsraum mit dem Seltenerd-haltigen Feststoff in Kontakt bringbar ist. Mit anderen Worten ist es erfindungsgemäß vorgesehen, dass der Reaktor wenigstens einen HCl-Brenner umfasst, mittels welchem Wasserstoff- und Chlorgas zu HCl verbrannt werden können, welches dann als Aufschlussmittel zum Aufschluss des Seltenerd-haltigen Feststoffs verwendbar ist. Der HCl-Brenner kann dazu grundsätzlich außerhalb des Reaktionsraums des Reaktors angeordnet sein, wobei das gebildete HCl in diesem Fall in den Reaktionsraum zu leiten ist, um zum Aufschluss des Feststoffs mit diesem in Kontakt gebracht werden zu können. Vorzugsweise ist der HCl-Brenner aber zumindest teilweise im Reaktionsraum selbst oder in unmittelbarer Nähe des Reaktionsraums, beispielsweise im Bereich einer Einlass- oder Auslassöffnung angeordnet, so dass das HCl unmittelbar im Reaktionsraum oder zumindest in dessen unmittelbarer Nähe erzeugt werden kann. Auf die Verwendung von Schwefelsäure oder sonstiger Säuren kann dabei vorteilhaft verzichtet werden. Im Gegensatz zur Nutzung von Schwefelsäure als Aufschlussmittel bietet die exotherme Erzeugung von HCl mit Hilfe des HCl-Brenners den Vorteil, dass die Gase H₂ und Cl₂ nicht nur stofflich für die Herstellung von Salzsäure, sondern gleichzeitig auch energetisch zur Reaktionsförderung genutzt werden können. Weitere Vorteile bestehen darin, dass in an den Aufschluss anschließenden Verfahrensschritten das für Seltenerden hochselektive Extraktionsmittel P507 verwendet werden kann. Zudem ist bei der Verwendung von Salzsäure auch eine relativ einfache Wiederaufarbeitung anfallender Salzlösungen möglich, beispielsweise mit Hilfe einer Chloralkali-Elektrolyse. Der erfindungsgemäße Reaktor eignet sich beispielsweise nicht nur zum Aufschluss von phosphatischen oder carbonatischen Seltenerd-Erzen bzw. Seltenerd-Erz-Konzentraten, sondern auch zum Aufschluss von silikatischen Seltenerd-Erzen bzw. Seltenerd-Erz-Konzentraten, da aufgrund der Erzeugbarkeit von wasserfreiem HCl-Gas eine bei Anwesenheit von Wasser ansonsten auftretende Gelbildung beim Aufschluss dieser Erze vermieden werden kann.

Weitere Vorteile ergeben sich, indem der Reaktor als Drehrohrofen, Wirbelschichtreaktor, Festbettreaktor, Hordenreaktor oder Rohrbündelreaktor ausgebildet ist. Hierdurch kann der Reaktor besonders einfach an unterschiedliche Seltenerd-haltige Feststoffe und unterschiedliche Aufschlussreaktionen angepasst und entsprechend einfach in unterschiedliche Gesamtprozesse integriert werden.

In einer weiteren vorteilhaften Ausgestaltung der Erfindung ist vorgesehen, dass der HCl-Brenner bezüglich des Reaktionsraums derart angeordnet ist, dass der Seltenerd-haltige Feststoff im Gleichstrom und/oder im Gegenstrom mit HCl beaufschlagbar ist. Je nach Ausgestaltung des Reaktors bzw. des Reaktionsraums kann der HCl-Brenner beispielsweise im Bereich einer Zuführöffnung angeordnet sein, wodurch der Reaktionsraum von einer Seite gemeinsam mit dem Gasstrom des HCl-Brenners und dem Feststoff beschickt werden kann, um den Reaktor im Gleichstrom zu betreiben. Alternativ oder zusätzlich kann der HCl-Brenner im Bereich einer Abführöffnung angeordnet sein, wodurch der Reaktionsraum von einer Seite mit dem Feststoff und von der anderen Seite mit dem Gasstrom des HCl-Brenners beschickt werden kann, um den Reaktor im Gegenstrom zu betreiben.

In einer weiteren vorteilhaften Ausgestaltung der Erfindung ist vorgesehen, dass der HCl-Brenner wenigstens drei Anschlüsse besitzt, wobei einer der Anschlüsse mit einer Wasserstoffquelle, einer der Anschlüsse mit einer Chlorquelle und einer der Anschlüsse mit einer Inertgasquelle und/oder einer Wasser- und/oder Wasserdampfquelle verbindbar oder verbunden ist. Hierdurch besteht die Möglichkeit, wahlweise HCl-Gas, Inertgas (z. B. N₂), Wasser bzw. Wasserdampf und/oder Salzsäure (HCl+H₂O) in den Reaktionsraum des Reaktors einzubringen, wodurch die Aufschlussreaktion besonders variabel durchführbar und besonders einfach an unterschiedliche Seltenerd-haltige Feststoffe anpassbar ist.

In weiterer Ausgestaltung der Erfindung umfasst der Reaktor wenigstens eine Zuführungseinrichtung, mittels welcher der im Reaktionsraum angeordnete Seltenerd-haltige Feststoff mit Wasser und/oder einer wässrigen Säure beaufschlagbar ist. Durch die Zugabe von Wasser bzw. einer wässrigen Säure können der Wassergehalt sowie der pH-Wert für die Aufschlussreaktion des Feststoffs eingestellt und beispielsweise innerhalb des Reaktionsraums und/oder während der Aufschlussreaktion variiert werden. In Abhängigkeit der jeweils vorherrschenden Temperatur können durch das Beaufschlagen des Feststoffs mit Wasser bzw. einer wässrigen Säure zudem eine bessere Durchmischung und damit ein schnellerer und vollständigerer Aufschluss des Feststoffs erreicht werden, da das Wasser bzw. die wässrige Säure zumindest teilweise zum Verdampfen gebracht werden kann und dabei den Feststoff aufwirbelt bzw. durchmischt. Es versteht sich, dass das Wasser bzw. die wässrige Säure mittels der Zuführungseinrichtung bei Bedarf bereits gasförmig bzw. als Wasserdampf in den Reaktionsraum eingebracht werden kann. Vorzugsweise ist die Zuführungseinrichtung derart ausgebildet und angeordnet, dass das in den Reaktionsraum eingebrachte Wasser bzw. die wässrige Säure zumindest im Wesentlichen nicht direkt auf eine den Reaktionsraum begrenzende Innenwand des Reaktors geleitet wird, um die thermische Belastung des Reaktors möglichst gering zu halten und unnötige Spannungen zu vermeiden. In anderen Worten ist die Zuführungseinrichtung in diesem Fall vorzugsweise derart ausgebildet, dass sichergestellt ist, dass die Innenoberfläche des Reaktors stets deutlich, das heißt mindestens 50 K, vorzugsweise mindestens 100 K über dem Siedepunkt des eingebrachten Wassers bzw. der eingebrachten wässrigen Säure liegt. Als wässrige Säure wird vorzugsweise Salzsäure verwendet, wobei grundsätzlich auch andere Säuren sowie Gemische aus unterschiedlichen Säuren denkbar sind.

In einer weiteren vorteilhaften Ausgestaltung der Erfindung umfasst die Zuführungseinrichtung zumindest eine Düse zum Steuern der Beaufschlagung des Seltenerd-haltigen Feststoffs mit dem Wasser und/oder der wässrigen Säure. Eine Düse erlaubt das gezielte Umlenken und/oder Zerstäuben des Flüssigkeitsstroms, wodurch das Wasser und/oder die wässrige Säure entsprechend präzise in den Reaktionsraum eingebracht werden können.

Eine besonders präzise Reaktionssteuerung ist in weiterer Ausgestaltung dadurch ermöglicht, dass der Reaktor mindestens zwei HCl-Brenner und mindestens zwei Zuführungseinrichtungen umfasst, die, vorzugsweise alternierend, entlang eines Transportpfads des Seltenerd-haltigen Feststoffs durch den Reaktionsraum angeordnet sind. Hierdurch kann ein besonders umfassender Aufschluss des Feststoffs sichergestellt werden, da der Feststoff entlang seines Transportpfads mehrfach mit gleichen oder unterschiedlichen Mengen an HCl, Salzsäure und/oder Wasser beaufschlagt und gut durchmischt werden kann. Insbesondere durch eine (streng) alternierende Anordnung HCl-Brenner - Zuführungseinrichtung - HCl-Brenner - Zuführungseinrichtung usw. wird sichergestellt, dass der aufzuschließende Feststoff vollständig mit Aufschlussmittel durchmischt wird (Mischzone), wodurch die Ausbeute erheblich gesteigert wird. Durch eine zweckmäßige Anordnung der HCl-Brenner und Zuführungseinrichtungen können innerhalb des Feststoffs gezielt feuchte Bereiche gebildet werden, die durch entsprechenden Temperatureintrag verdampfen und zu einer besseren Durchmischung beitragen.

Ein zweiter Aspekt der Erfindung betrifft ein Verfahren zum Betreiben eines Reaktors gemäß dem ersten Erfindungsaspekt. Das erfindungsgemäße Verfahren umfasst dabei zumindest die Schritte Einbringen eines Seltenerd-haltigen Feststoffs in einen Reaktionsraum des Reaktors, Erzeugen von HCl durch direkte Reaktion von Wasserstoff und Chlor mittels wenigstens eines HCl-Brenners des Reaktors und Aufschließen des Seltenerd-haltigen Feststoffs durch In-Kontakt-Bringen des Seltenerd-haltigen Feststoffs mit dem erzeugten HCl im Reaktionsraum. Hierdurch wird ein verbesserter Aufschluss von Seltenerd-haltigen Feststoffen sowie eine einfachere und vollständigere Gewinnung von Seltenerden ermöglicht. Das Verfahren kann dabei auf Wunsch vorteilhaft ohne Lufteintrag durchgeführt werden. Durch die einfache Steuerung und Anpassbarkeit der HCl-Konzentration und -Menge kann das Verfahren zudem vorteilhaft abgasfrei oder zumindest im Wesentlichen abgasfrei durchgeführt werden, wodurch auf teuere und aufwändige Abgasreinigungsmaßnahmen vorteilhaft verzichtet werden kann. Weitere sich hieraus ergebenden Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In einer vorteilhaften Ausgestaltung der Erfindung wird als Seltenerd-haltiger Feststoff Eudialyt verwendet. Für den großtechnischen Aufschluss von Eudialyt zur Gewinnung von Seltenerd-Elementen ist derzeit keine Technologie bekannt, obwohl Eudialyt den Vorteil eines relativ hohen Anteils der wertvolleren schweren Seltenerd-Elemente besitzt und im Vergleich zu anderen Seltenerd-haltigen Erzen weniger unerwünschte Begleitelemente wie beispielsweise Thorium oder Uran enthält. Ein Grund, warum dieses Mineral bislang nicht für die Herstellung der Seltenerd-Elemente herangezogen wird, ist, dass es sich um ein silikatisches Mineral handelt, welches in wässriger Lösung und bei der Reaktion mit Schwefelsäure zur Gelbildung und/oder zur Bildung von unlöslichen Seltenerd-Doppelsulfaten neigt. Dies ist aus technischer Sicht unerwünscht und verkompliziert die weitere Aufarbeitung erheblich. Da im Rahmen des erfindungsgemäßen Verfahrens aber zunächst HCl-Gas erzeugt und als Aufschlussmittel verwendet wird, kann der Aufschluss von Eudialyt zunächst mit einer sehr hohen Säurekonzentration oder sogar vollständig wasserfrei durchgeführt werden, so dass eine Gelbildung zuverlässig verhindert wird. Bei Bedarf kann Wasser bzw. eine wässrige Säure erst zu einem späteren Zeitpunkt der Aufschlussreaktion zugegeben werden, um einen veränderten pH-Wert einzustellen oder bereits aufgeschlossene Verbindungen zu lösen. Die Zugabe kann beispielsweise über eine oder mehrere Zuführungseinrichtungen des Reaktors erfolgen.

Weitere Vorteile ergeben sich, wenn der Seltenerd-haltige Feststoff entlang eines Transportpfads durch den Reaktionsraum transportiert wird. Dies erlaubt eine besonders einfache Kontrolle des Durchsatzes und der Verweildauer des Feststoffs im Reaktionsraum, wodurch ein möglichst vollständiger Aufschluss sichergestellt werden kann. Beispielsweise kann der Reaktor als Drehrohrofen ausgebildet sein, so dass der Seltenerd-haltige Feststoff durch das Drehrohr als Reaktionsraum des Reaktors transportiert und innerhalb des Drehrohrs aufgeschlossen werden kann. Über Parameter wie Rohrlänge, Rohrdurchmesser, Drehzahl und Rohrneigung können dabei der Durchsatz, die Verweildauer und die Durchmischung des Feststoffs im Drehrohr besonders einfach kontrolliert und gesteuert werden, um einen möglichst vollständigen Aufschluss sicherzustellen.

In einer weiteren vorteilhaften Ausgestaltung der Erfindung ist vorgesehen, dass der Seltenerd-haltige Feststoff entlang des Transportpfads derart mit Wasser und/oder einer wässrigen Säure und/oder Wärmeenergie beaufschlagt wird, dass der Seltenerd-haltige Feststoff aufgrund von Verdampfungsreaktionen zumindest bereichsweise durchmischt wird und/oder dass eine HCl-Konzentration entlang des Transportpfads durch den Reaktionsraum schrittweise und/oder kontinuierlich sinkt. Dies erlaubt die Ausbildung mehrerer Reaktionszonen innerhalb des Reaktionsraums, wodurch die Ausbeute der Aufschlussreaktion zusätzlich verbessert werden kann.

In einer weiteren vorteilhaften Ausgestaltung der Erfindung wird wenigstens eine Seltenerd-haltige Verbindung aus Aufschlussprodukten des Aufschlusses isoliert. Dies erlaubt in Abhängigkeit des ursprünglich verwendeten und aufgeschlossenen Seltenerd-haltigen Feststoffs die Gewinnung von unterschiedlichen Seltenerd-Elementen.

Weitere Vorteile werden erzielt, indem die wenigsten eine Seltenerd-haltige Verbindung mittels eines Extraktionsverfahrens aus den Aufschlussprodukten isoliert wird, wobei als Extraktionsmittel vorzugsweise zumindest 2-Ethylhexyl-2-ethylhexylphosphonsäureester (P507) verwendet wird. Dies erlaubt eine einfache Isolierung der wenigsten einen Seltenerd-haltigen Verbindung, wobei besonders hohe Selektivitäten und Ausbeuten insbesondere durch die Verwendung von P507 als Extraktionsmittel möglich sind. Aufgrund des vorhergehenden Aufschlusses mit Hilfe von HCl bzw. Salzsäure kann die wenigsten eine Seltenerd-haltige Verbindung problemlos aus den Aufschlussprodukten isoliert werden, da keine störenden Sulfat-Ionen vorhanden sind.

In einer weiteren vorteilhaften Ausgestaltung der Erfindung wird wässrige Salzsäure von weiteren Aufschlussprodukten abgetrennt und in den Aufschluss zurückgeführt und/oder zur Rückgewinnung von Wasserstoff und/oder Chlor zur Speisung des HCl-Brenners verwendet wird. Dies erlaubt eine umfassende stoffliche Wiederverwendung der während des Aufschlusses anfallenden Salzsäure, wodurch neben ökologischen Vorteilen auch erhebliche Kostensenkungen gegeben sind.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- FIG 1: eine schematische Perspektivansicht eines erfindungsgemäßen Reaktors gemäß einem ersten Ausführungsbeispiel;
- FIG 2: eine schematische Schnittansicht des Reaktors gemäß einer in FIG 1 gezeigten Schnittebene II;
- FIG 3: eine schematische Perspektivansicht des erfindungsgemäßen Reaktors gemäß einem zweiten Ausführungsbeispiel;
- FIG 4: eine schematische Schnittansicht des Reaktors gemäß einer in FIG 3 gezeigten Schnittebene IV; und
- FIG 5: eine schematische Schnittansicht des Reaktors gemäß einer in FIG 3 gezeigten Schnittebene V.

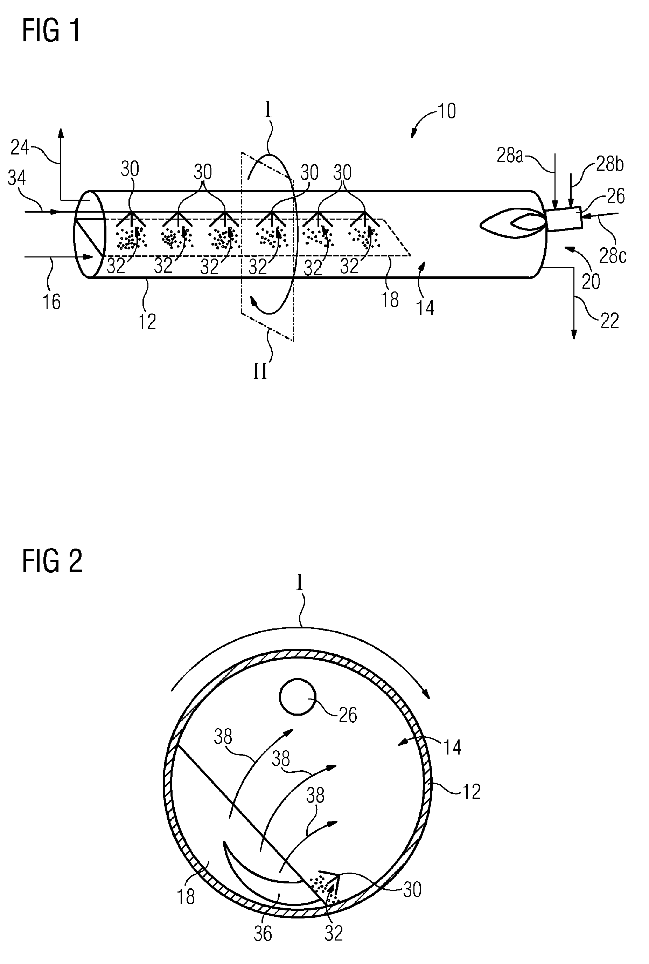

FIG 1 zeigt eine schematische Perspektivansicht eines erfindungsgemäßen Reaktors 10 gemäß einem ersten Ausführungsbeispiel und wird im Folgenden in Zusammenschau mit FIG 2 erläutert werden, welche eine schematische Schnittansicht des Reaktors 10 gemäß einer in FIG 1 gezeigten Schnittebene II zeigt. Der Reaktor 10 ist vorliegend als Drehrohrofen ausgebildet und umfasst ein an sich bekanntes Drehrohr 12, welches einen Reaktionsraum 14 im Inneren des Drehrohrs 12 bereitstellt und gemäß Pfeil I mit einer einstellbaren Geschwindigkeit gedreht wird. Das Drehrohr 12 umfasst an einem Ende eine Zuführöffnung 16, durch welche Seltenerd-haltiger Feststoff 18 zum Aufschließen in den Reaktionsraum 14 eingebracht wird. An seinem anderen Ende weist das Drehrohr 12 eine Abführöffnung 20 auf, durch welche Aufschlussprodukte 22 aus dem Reaktor 10 bzw. dem Reaktionsraum 14 entfernt werden. Aufgrund der Neigung des Drehrohrs 12, die üblicherweise zwischen etwa 1° und 3° beträgt, können in Abhängigkeit der Reaktionsführung gebildete Abgase 24 aus der höher liegenden Zuführöffnung 16 des Reaktors 10 entweichen. In Abhängigkeit der Art der Abgase 24 können diese aufgefangen und gereinigt und/oder zur stofflichen Rückgewinnung recycelt werden.

Im Bereich der Abführöffnung 20 ist ein HCl-Brenner 26 angeordnet, welcher im vorliegenden Ausführungsbeispiel über drei Anschlüsse 28a-c mit Wasserstoff (Anschluss 28a), Chlor (Anschluss 28b) und bedarfsweise mit Inertgas und/oder Wasser bzw. Wasserdampf (Anschluss 28c) versorgt wird. Der Anschluss 28c ist dabei grundsätzlich optional und nicht zwingend erforderlich für die Durchführung des Aufschlussverfahrens. Durch die direkte Reaktion von Wasserstoff und Chlor wird mittels des HCl-Brenners 26 gasförmiges HCl erzeugt, als säurehaltiges Aufschlussmittel in den Reaktionsraum 14 geleitet und dort mit dem Seltenerd-haltigen Feststoff 18 in Kontakt gebracht, um diesen sauer aufzuschließen. Die Gase H₂ und Cl₂ werden dabei nicht nur stofflich für die Herstellung des säurehaltigen Aufschlussmittels, sondern gleichzeitig auch energetisch zur Reaktionsförderung genutzt. Durch die Zudosierung von Wasser bzw. Wasserdampf über den Anschluss 28c kann mit Hilfe des HCl-Brenners 26 bedarfsweise auch wässrige Salzsäure gebildet werden. Auf die Verwendung von Schwefelsäure oder anderer Säuren kann grundsätzlich verzichtet werden.

Weiterhin umfasst der Reaktor 10 mehrere Zuführungseinrichtungen 30, mittels welchen der im Reaktionsraum 14 angeordnete Seltenerd-haltige Feststoff 18 mit Wasser bzw. Wasserdampf und/oder einer wässrigen Säure, insbesondere Salzsäure, beaufschlagbar ist. Die Zuführungseinrichtungen 30 weisen hierzu jeweils eine Düse 32 auf, mittels welcher der Fluidstrom aus Wasser bzw. Wasserdampf und/oder wässriger Säure zerstäubt und auf den Feststoff 18 gelenkt wird. Im gezeigten Ausführungsbeispiel werden die Zuführungseinrichtungen 30 über eine gemeinsame Leitung 34 gespeist. Alternativ kann natürlich vorgesehen sein, dass mehrere oder alle Zuführungseinrichtungen 30 über eine separate Leitung 34 versorgt werden.

Im ersten Ausführungsbeispiel ist der HCl-Brenner 26 bezüglich des Reaktionsraums 14 derart angeordnet, dass der Seltenerd-haltige Feststoff 18 im Gegenstrom mit HCl beaufschlagt wird. Die Zuführungseinrichtungen 30 sind demgegenüber im Bereich der Zuführöffnung 16 entlang eines durch die Geometrie des Drehrohrs 12 definierten Transportpfads des Feststoffs 18 in vorbestimmten Abständen zueinander angeordnet und erstrecken sich über weniger als etwa 2/3 der Länge des Drehrohrs 12. Somit ist der Reaktionsraum 14 in eine sich über den Bereich der Zuführungseinrichtungen 30 erstreckende wasserhaltige Zone und eine sich zwischen den Zuführungseinrichtungen 30 und dem HCl-Brenner 26 erstreckende wasserfreie oder zumindest weitgehend wasserfreie Zone unterteilt.

Diese Anordnung und das mit Hilfe des Reaktors 10 durchführbare Aufschlussverfahren lässt sich prinzipiell für den Aufschluss von phosphatischen und/oder carbonatischen Seltenerd-Erz-Konzentraten einsetzen, ist aber besonders vorteilhaft bei dem Aufschluss des Seltenerd-Minerals Eudialyt und chemisch ähnlicher Seltenerd-haltiger Feststoffe 18, da sich die Reaktionsbedingungen im Reaktionsraum 14 so einstellen lassen, dass eine unerwünschte Gelbildung beim Aufschluss von Eudialyt vermieden wird.

Dabei kann das axiale Temperaturprofil der Reaktionspartner im Drehrohr 12 so eingestellt werden, dass auf der Seite des Feststoff-Eingangs (Zuführöffnung 16) heiße, aber flüssige Salzsäure vorliegt, der andere Endbereich des Drehrohrs 12 (Abführöffnung 20) jedoch trocken bzw. zumindest im Wesentlichen wasserfrei ist. Mit anderen Worten wird der Feststoff 18 erst dann in Kontakt mit Wasser gebracht, wenn der Aufschluss der schwerlöslichen Komponenten des Feststoffs 18 bereits in ausreichendem Umfang erfolgt ist.

Diese Fahrweise kombiniert die Vorteile eines schnellen Stoffübergangs zwischen flüssiger und fester Phase. Vorteilhaft ist, dass sich über die Wahl der Prozessbedingungen der Säureanteil der Aufschlussprodukte 22 präzise einstellen lässt. Dies ermöglicht es bei einer nachfolgenden Laugung beispielsweise mit reinem Wasser oder mit recycelten Lösungen zu arbeiten, wodurch entsprechende ökologische und ökonomische Vorteile realisiert werden. Zudem kann der resultierende pH-Wert bestmöglich an die jeweiligen Anforderungen eines nachfolgenden Prozessschritts angepasst werden. Beispielsweise kann durch eine geeignete Wahl des pH-Wertes bei einer auf den Aufschluss folgenden Laugung das Lösen unerwünschter Stoffe vermieden oder der Chemikalienverbrauch der nachfolgenden Schritte verringert werden.

Wie man insbesondere in FIG 2 erkennt, können die Zuführungseinrichtungen 30 zudem zur besseren Durchmischung des Feststoffs 18 verwendet werden. Ein grundsätzlicher Nachteil eines Drehrohrs 12 besteht darin, dass der umzusetzende Feststoff 18 häufig nicht optimal durchmischt wird, sondern dass nur ein relativ kleiner Teil des Feststoffs 18 durch die Drehung des Drehrohrs 12 umgewälzt wird (Mischzone), während ein Großteil quasi unverändert durch das Drehrohr 12 wandert. Indem mittels der Zuführungseinrichtungen 30 Wasser oder wässrige Säure in bzw. auf den Feststoff 18 gesprüht wird, wird in Abhängigkeit der örtlichen Temperatur eine lokale Verdampfungszone 36 erzeugt, die den Feststoff 18 aufwirbelt und zusammen mit der Drehung des Drehrohrs 12 zu einer besseren Durchmischung des Feststoffs 18 und damit zu einer höheren Ausbeute führt. Dies ist in FIG 2 mit Pfeilen 38 symbolisiert. Durch die Abkühlung mit Wasser kann zudem der Abgasaustrag aus dem Reaktor 10 minimiert oder vollständig verhindert werden, so dass im Idealfall keine Abgasnachbehandlung erforderlich ist.

Durch die geschickte Anordnung der Düsen 32 sowie durch die Wahl eines geeigneten Feuerfestmaterials für die Innenwand des Drehrohrs 12 wird vermieden, dass die Verdampfung direkt an der inneren Rohroberfläche geschieht, so dass schwankende (bei jeder Umdrehung) thermische Belastungen des Drehrohrs 12 zuverlässig vermieden werden. Vorzugsweise wird sichergestellt, dass die innere Oberfläche des Drehrohrs 12 stets deutlich (>50 K, besser 100 K oder mehr) über dem Siedepunkt des H₂O/HCl-Gemisch liegt.

Alternativ kann der Reaktor 10 auch im Gleichstrom betrieben werden. Dabei wird das Drehrohr 12 von der gleichen Seite, beispielsweise von der Zuführöffnung 16 oder der Abführöffnung 20, mit dem Gasstrom des HCl-Brenners 26 und dem Feststoff 18 beschickt. In einer heißen ersten Reaktionszone findet dann eine schnelle Aufschlussreaktion statt. In einer zweiten kälteren Zone, die der ersten Zone in Strömungsrichtung folgt, wird dann mittels einer oder mehrerer Zuführungseinrichtungen 30 Wasser eingedüst. Es bildet sich ein Gemisch aus Feststoff 18 und Salzsäure, deren Konzentration durch die eingedüste Wassermenge bzw. die eingedüste Säuremenge eingestellt werden kann. In diesem Gemisch kann dann eine weitere Aufschlussreaktion mit der Salzsäure stattfinden. Die aus dem Reaktionsraum 14 austretenden Aufschlussprodukte 22 können direkt mit Wasser vermischt und in eine wässrige Lösung zur weiteren Verarbeitung gebracht werden.

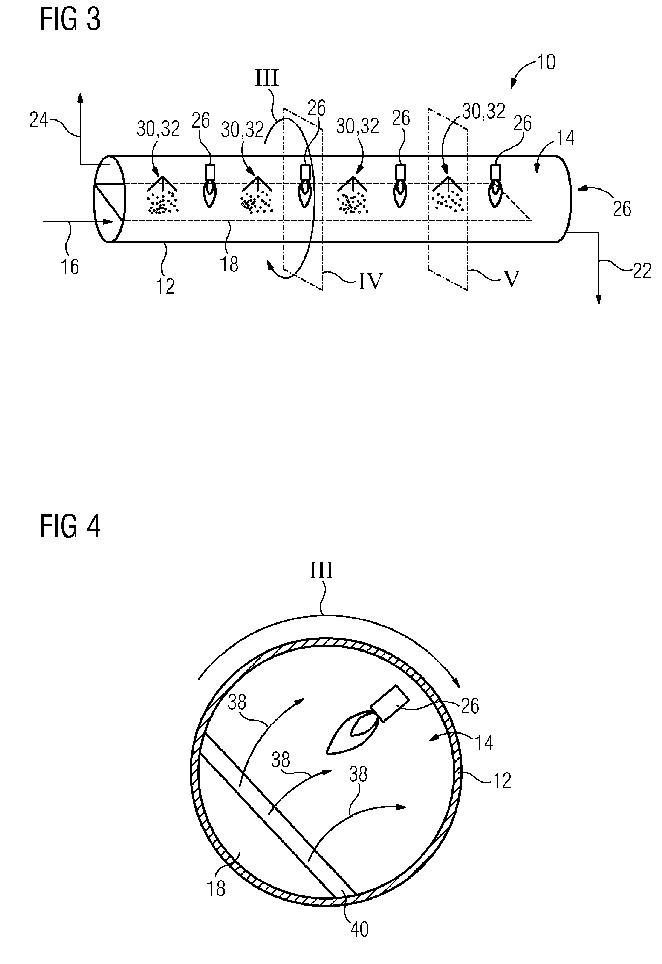

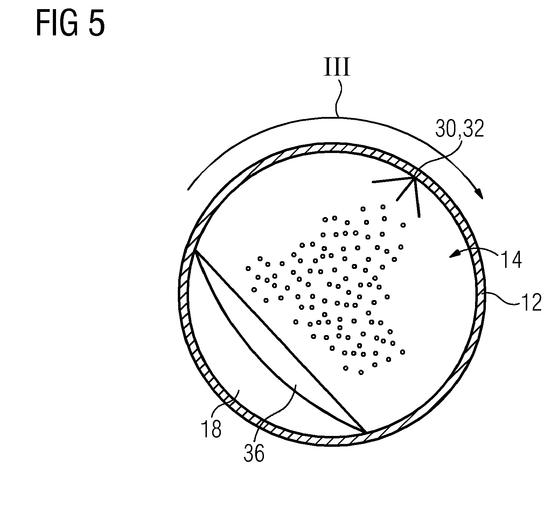

FIG 3 zeigt in schematischer Perspektivansicht ein zweites Ausführungsbeispiel des erfindungsgemäßen Reaktors 10. FIG 4 und FIG 5 zeigen zur weiteren Verdeutlichung jeweils schematische Schnittansichten durch den Reaktor 10 gemäß den in FIG 3 gezeigten Schnittebenen IV bzw. V. Im Unterschied zum vorhergehenden Ausführungsbeispiel umfasst der in FIG 3 gezeigte Reaktor 10 mehrere HCl-Brenner 26 sowie mehrere Zuführungseinrichtungen 30, die alternierend entlang des Drehrohrs 12 im Reaktionsraum 14 angeordnet sind. Aus Gründen der Übersichtlichkeit sind Zuleitungen und Anschlüsse für die Düsen 32 bzw. Zuführungseinrichtungen 30 und den HCl-Brenner 26 in FIG 3 nicht dargestellt. Wie man in FIG 4 erkennt, bildet sich im Bereich der HCl-Brenner 26 jeweils eine säurereiche Reaktions- und Verdampfungszone 40 aus, in der der Feststoff 18 aufgeschlossen wird. Im Bereich der Zuführungseinrichtungen 30 bilden sich durch die Beaufschlagung mit Wasser oder wässriger Säure die säureärmeren Verdampfungszonen 36 aus. Durch die abwechselnde Anordnung der HCl-Brenner 26 und Zuführungseinrichtungen 30 werden insbesondere eine intensive, wiederholte Durchmischung sowie eine regelmäßige Erhöhung des pH-Werts erreicht, wodurch ebenfalls besonders hohe Ausbeuten an Aufschlussprodukten sichergestellt werden.

Alle erfindungsgemäßen Reaktoren 10 ermöglichen es, anfallende Salzlösungen, die bei der Separation von Seltenerd-Elementen anfallen, zum Beispiel per Chloralkali-Elektrolyse wieder aufzubereiten. Weiterhin werden mit Hilfe des oder der HCl-Brenner 26 neben einer stofflichen Nutzung auch eine energetische Nutzung von Wasserstoff und Chlor erzielt. Durch eine geschickte Anordnung von Zuführungseinrichtungen 30 bzw. von Düsen 32, die innerhalb des Reaktionsraums 14 Wasser oder wässrige Säure versprühen, lässt sich zusätzlich die Durchmischung und somit die Effizienz des Reaktors 10 steigern. Besonders vorteilhaft ist der Aufschluss von Eudialyt, da der Aufschluss so gesteuert werden kann, dass eine Gelbildung im Reaktionsraum 14 sowie in einem anschließenden Laugungsprozess vermieden wird. Durch den Verzicht auf Schwefelsäure kann dabei als Extraktionsmittel P507 eingesetzt werden. Durch den Verzicht auf einen Lufteintrag und die Möglichkeit der vollständigen Überführung von HCl in eine wässrige Phase durch das Eindüsen von Wasser, kann der Aufschluss abgasfrei durchgeführt werden. Dadurch entfallen aufwändige Abgasreinigungsmaßnahmen.

## Patentansprüche

1. Reaktor (10) zum Aufschließen eines Seltenerd-haltigen Feststoffs (18), insbesondere eines Seltenerd-haltigen Erzes, wobei der Reaktor (10) einen Reaktionsraum (14) umfasst, in welchem der Seltenerd-haltige Feststoff (18) zum Aufschließen mit einem säurehaltigen Aufschlussmittel in Kontakt bringbar ist, **dadurch gekennzeichnet, dass** der Reaktor (10) wenigstens einen HCl-Brenner (26) umfasst, mittels welchem HCl durch eine direkte Reaktion von Wasserstoff und Chlor herstellbar und als Aufschlussmittel im Reaktionsraum (14) mit dem Seltenerd-haltigen Feststoff (18) in Kontakt bringbar ist.

2. Reaktor (10) nach Anspruch 1, **dadurch gekennzeichnet, dass** dieser als Drehrohrofen, Wirbelschichtreaktor, Festbettreaktor, Hordenreaktor oder Rohrbündelreaktor ausgebildet ist.

3. Reaktor (10) nach Anspruch 1 oder 2, **dadurch gekennzeichnet, dass** der HCl-Brenner (26) bezüglich des Reaktionsraums (14) derart angeordnet ist, dass der Seltenerd-haltige Feststoff (18) im Gleichstrom und/oder im Gegenstrom mit HCl beaufschlagbar ist.

4. Reaktor (10) nach einem der Ansprüche 1 bis 3, **dadurch gekennzeichnet, dass** der HCl-Brenner (26) wenigstens drei Anschlüsse (28a-c) besitzt, wobei einer der Anschlüsse (28a) mit einer Wasserstoffquelle, einer der Anschlüsse (28b) mit einer Chlorquelle und einer der Anschlüsse (28c) mit einer Inertgasquelle und/oder einer Wasser- und/oder Wasserdampfquelle verbindbar oder verbunden ist.

5. Reaktor (10) nach einem der Ansprüche 1 bis 4, **dadurch gekennzeichnet, dass** dieser wenigstens eine Zuführungseinrichtung (30) umfasst, mittels welcher der im Reaktionsraum (14) angeordnete Seltenerd-haltige Feststoff (18) mit Wasser und/oder einer wässrigen Säure beaufschlagbar ist.

6. Reaktor (10) nach Anspruch 5, **dadurch gekennzeichnet, dass** die Zuführungseinrichtung (30) zumindest eine Düse (32) zum Steuern der Beaufschlagung des Seltenerd-haltigen Feststoffs (18) mit dem Wasser und/oder der wässrigen Säure umfasst.

7. Reaktor (10) nach einem der Ansprüche 5 oder 6, **dadurch gekennzeichnet, dass** dieser mindestens zwei HCl-Brenner (26) und mindestens zwei Zuführungseinrichtungen (30) umfasst, die, vorzugsweise alternierend, entlang eines Transportpfads des Seltenerd-haltigen Feststoffs (18) durch den Reaktionsraum (14) angeordnet sind.

8. Verfahren zum Betreiben eines Reaktors (10) nach einem der Ansprüche 1 bis 7, bei welchem zumindest folgende Schritte durchgeführt werden:
- Einbringen eines Seltenerd-haltigen Feststoffs (18) in einen Reaktionsraum (14) des Reaktors (10);
- Erzeugen von HCl durch direkte Reaktion von Wasserstoff und Chlor mittels wenigstens eines HCl-Brenners (26) des Reaktors (10); und
- Aufschließen des Seltenerd-haltigen Feststoffs (18) durch In-Kontakt-Bringen des Seltenerd-haltigen Feststoffs (18) mit dem erzeugten HCl im Reaktionsraum (14).

9. Verfahren nach Anspruch 8, **dadurch gekennzeichnet, dass** als Seltenerd-haltiger Feststoff (18) Eudialyt verwendet wird.

10. Verfahren nach Anspruch 8 oder 9, **dadurch gekennzeichnet, dass** der Seltenerd-haltige Feststoff (18) entlang eines Transportpfads durch den Reaktionsraum (14) transportiert wird.

11. Verfahren nach Anspruch 10, **dadurch gekennzeichnet, dass** der Seltenerd-haltige Feststoff (18) entlang des Transportpfads derart mit Wasser und/oder einer wässrigen Säure und/oder Wärmeenergie beaufschlagt wird, dass der Seltenerd-haltige Feststoff (18) aufgrund von Verdampfungsreaktionen zumindest bereichsweise durchmischt wird und/oder dass eine HCl-Konzentration entlang des Transportpfads durch den Reaktionsraum (14) schrittweise und/oder kontinuierlich sinkt.

12. Verfahren nach einem der Ansprüche 8 bis 11, **dadurch gekennzeichnet, dass** wenigstens eine Seltenerd-haltige Verbindung aus Aufschlussprodukten des Aufschlusses isoliert wird.

13. Verfahren nach Anspruch 12, **dadurch gekennzeichnet, dass** die wenigsten eine Seltenerd-haltige Verbindung mittels eines Extraktionsverfahrens aus den Aufschlussprodukten isoliert wird, wobei als Extraktionsmittel vorzugsweise zumindest 2-Ethylhexyl-2-ethylhexylphosphonsäureester (P507) verwendet wird.

14. Verfahren nach einem der Ansprüche 8 bis 13, **dadurch gekennzeichnet, dass** wässrige Salzsäure von weiteren Aufschlussprodukten abgetrennt und in den Aufschluss zurückgeführt und/oder zur Rückgewinnung von Wasserstoff und/oder Chlor zur Speisung des HCl-Brenners (26) verwendet wird.
